# EUROPÄISCHE PATENTSCHRIFT

(11) **EP 3 013 513 B1**
(45) Veröffentlichungstag und Bekanntmachung des Hinweises auf die Patenterteilung: **27.02.2019**
(21) Anmeldenummer: 14729907.7
(22) Anmeldetag: 13.06.2014
(51) Int. Cl.: B07B 1/12, B23K 20/227, C21D 6/00, C22C 38/02, C22C 38/04, C22C 38/06, C22C 38/44, C22C 38/48, C22C 38/54, B23K 103/18, B23K 101/18, B23K 103/04, B07B 1/46, B23K 20/04

(54) **SIEBSTANGE, STANGENSIEB UND VERFAHREN ZUR HERSTELLUNG EINER SIEBSTANGE**
SCREEN BAR, BAR SCREEN AND METHOD FOR PRODUCING A SCREEN BAR
BARREAU DE CRIBLE, CRIBLE À BARREAUX ET PROCÉDÉ DE FABRICATION D'UN BARREAU DE CRIBLE

(30) Priorität: 24.06.2013 DE 102013106570
(43) Veröffentlichungstag der Anmeldung: 04.05.2016
(73) Patentinhaber: ThyssenKrupp Steel Europe AG, 47166 Duisburg (DE); thyssenkrupp Industrial Solutions AG, 45143 Essen (DE)
(72) Erfinder: LINKE, Natasja, 42475 Kamp-Lintfort (DE); KERN, Andreas, 40885 Ratingen (DE); TSCHERSICH, Hans-Joachim, 46282 Dorsten (DE); LEUSCHEN, Guido, 33615 Bielefeld (DE)
(74) Vertreter: thyssenkrupp Intellectual Property GmbH
(86) Internationale Anmeldenummer: PCT/EP2014/062378
(87) Internationale Veröffentlichungsnummer: WO 2014/206772

(56) Entgegenhaltungen:
- EP-A2- 0 265 421
- DE-A1- 10 011 758
- DE-B3-102005 006 606
- US-A- 4 831 708

## Beschreibung

Die Erfindung betrifft eine Siebstange, ein unter Verwendung einer solchen Siebstange hergestelltes Stangensieb und ein Verfahren zum Herstellen einer Siebstange.

Stangensiebe werden in unterschiedlichsten Bereichen der Technik zum Aussieben von größeren Festkörpern aus strömenden Fluiden, insbesondere Flüssigkeiten, rieselndem Schüttgut und desgleichen verwendet. Beispiele für derartige Stangensiebe sind in der DE 603 07 789 T2, der DE 41 26 240 C1 und der EP 0 265 421 A2 beschrieben.

Gemeinsam ist den bekannten Stangensieben, dass die Siebwirkung durch parallel zueinander angeordnete Siebstangen erzielt wird, die mit ihrem einen Ende an einer Trägereinheit gehalten sind und mit ihrem anderen Ende frei schwingend im Strömungs- oder Förderweg des zu siebenden Guts stehen. Die zwischen den Siebstangen vorhandene Spaltweite bestimmt dabei, ab welcher Größe die auf das Sieb treffenden Teile ausgesiebt werden oder bis zu welcher Teilgröße sie das Sieb passieren können. Da die Enden der Siebstangen frei auslaufen, ist die Gefahr einer Verstopfung durch das Siebgut verringert. Die Siebstangen sind dabei in der Regel in einer Ebene angeordnet. Der Transport des Siebgutes über das Stangensieb kann dabei auch dadurch erfolgen, dass die Siebstangen zu ihrem freien Ende hin abwärts geneigt sind. Unterstützt wird der lineare Transport des Siebgutes in der Regel dann durch eine Auf- und Abwärtsbewegung des freien Endes der Siebstangen, die über einen Exzenter bewirkt wird.

Unabhängig vom Einsatzgebiet sind Siebstangen im Gebrauch hohen dynamischen Belastungen unterworfen, da die jeweils zu filternden Teile jeweils eine vergleichbar große Masse besitzen und daher mit hoher kinetischer Energie auf die Stangen treffen. Gleichzeitig sind beispielsweise Siebstangen, die in Zerkleinerungsmaschinen, wie Hammerbrechern oder Shreddern, eingesetzt werden, einer enormen Beanspruchung durch abrasiven Verschleiß ausgesetzt.

Der Aufwand, der mit einem in kurzen Zeitabständen erforderlich werdenden Austausch von Siebstangen verbunden ist, ist erheblich. Infolgedessen besteht die Forderung, dass Siebstangen einerseits unempfindlich gegen abrasiven Verschleiß sein sollen und andererseits ausreichend gute Federeigenschaften besitzen sollen, um auch in hoher Frequenz auftretende harte Stöße ohne die Gefahr eines Materialbruchs aufnehmen zu können.

Um diesem Anforderungsprofil gerecht zu werden, werden im Gebrauch freischwingende Siebstangen der hier in Rede stehenden Art in der Regel aus Federstählen oder anderen hochfesten Stahlwerkstoffen gefertigt, die eine ausreichende elastische Verformung zulassen.

Wie in der DE 41 26 240 C1 erläutert, kann die Verschleißbeständigkeit von aus derartigen Stählen hergestellten, beim betreffenden Stand der Technik für Pflanzenölpressen bestimmten Siebstangen dadurch weiter erhöht werden, dass die Siebstangen mit einer verschleißfesten Beschichtung belegt werden. Die Beschichtung soll dabei aus einem Verbundwerkstoff mit 60 - 80 Vol.-% eines Hartstoffs und 20 - 40 Vol.-% einer Lotlegierung bestehen. Vorzugsweise soll als Hartstoff Wolframcarbid und/oder Chromcarbid und als Lotlegierung Nickelbasislote, beispielsweise eine Ni-Cr-B-Si-Legierung, verwendet werden.

Der Vorteil einer derartigen Verbundwerkstoff-Beschichtung soll darin bestehen, dass sie besonders gut auf dem jeweiligen Stahlsubstrat haftet und einen guten Schutz vor Verschleiß bietet. Allerdings ist dazu ein vergleichbar aufwändiges Herstellverfahren erforderlich, das zudem thermisch bedingten Verzug der jeweils einzeln zu beschichtenden Siebstangen mit sich bringen kann.

DE 10 2005 006 606 offenbart ein Verfahren zur Herstellung walzplattierter Warmbänder, wobei der Kohlenstoffgehalt des Stahls der Außenlagen mit 0,7 Gew.-% angegeben ist.

DE 100 11 758 offenbart ein Verfahren zur Herstellung von Stahlbauteilen und entsprechend hergestellte Stahlbauteile, welche eine Kernschicht und eine äußere Randschicht aufweisen, wobei die Schichten mittels eines Gießverfahrens miteinander verbunden werden.

US 4,831,708 A offenbart ein Verfahren zum Walzen von übereinandergelegten Materiallagen, wobei eine mittlere Lage aus einem Stoff besteht, welcher die unterhalb der Mittellage platzierten Materiallagen von den oberhalb der Mittellage platzierten Materiallagen trennt, sodass der Mehrlagenverbund nach dem Walzprozess wieder geteilt werden kann.

Vor diesem Hintergrund bestand die Aufgabe der Erfindung darin, eine Siebstange und ein mit einer solchen Siebstange ausgerüstetes Stangensieb zu schaffen, die bei kostengünstigerer Herstellung und langer Standzeit verbesserte Gebrauchseigenschaften besitzen. Darüber hinaus sollte ein Verfahren angegeben werden, mit dem sich solche Siebstangen kostengünstig herstellen lassen.

Eine diese Aufgabe erfindungsgemäß lösende Siebstange weist die in Anspruch 1 angegebenen Merkmale auf.

In Bezug auf das Stangensieb besteht die Lösung der voranstehend genannten Aufgabe gemäß der Erfindung darin, dass ein solches Stangensieb mit Siebstangen der erfindungsgemäßen Art ausgestattet ist.

Ein Verfahren, das die voranstehend genannte Aufgabe erfindungsgemäß löst, umfasst schließlich die in Anspruch 8 angegebenen Verfahrensschritte.

Vorteilhafte Ausgestaltungen der Erfindung sind in den abhängigen Ansprüchen genannt und werden nachfolgend wie der allgemeine Erfindungsgedanke näher erläutert.

Der Erfindung liegt der Gedanke zu Grunde, Siebstangen aus einem mehrlagigen Stahl-Verbundwerkstoff zu fertigen, der mindestens eine Kernlage aufweist, die wiederum auf ihren beiden flächigen Seiten mit jeweils einer Decklage belegt ist. Die äußeren Decklagen bestehen dabei aus hartem Stahl, wogegen die innere Kernlage aus einem Stahl besteht, der verformbarer ist als der jeweilige Stahl der Decklagen und als solcher in der Lage ist, elastische und erforderlichenfalls plastische oder teilplastische Verformungen ohne die Gefahr eines Bruchs aufzunehmen. Die höhere Verformbarkeit der Kernlage drückt sich dabei darin aus, dass ihre die Verformbarkeit kennzeichnenden Kennwerte, insbesondere ihre Bruchdehnung, besser sind als die korrespondierenden Kennwerte der Decklagen. Die aus einem härteren Stahl bestehenden, jedoch eine geringere Verformbarkeit aufweisenden Decklagen bieten demgegenüber die erforderliche Verschleißbeständigkeit, insbesondere gegenüber abrasivem Verschleiß, die der Stahl der Kernlage alleine nicht leisten könnte.

Die Anbindung der Decklagen an die Kernlage erfolgt erfindungsgemäß durch Walzplattieren. Auf diese Weise wird ein Verbundstahlblech geschaffen, bei dem im Hinblick auf die Verwendung "Herstellung von Siebstangen" die harten Deckschichten die erforderliche Beständigkeit gegen abrasiven Verschleiß und die innere Kernlage die Verformbarkeit gewährleisten, die erforderlich ist, um auch harte, in schneller Abfolge auftretende dynamische Belastungen ohne die Gefahr eines Materialbruchs aufzunehmen.

Eine erfindungsgemäße Siebstange ist aus einem Verbundstahlblech hergestellt, das aus mindestens drei aufeinanderliegenden und durch Walzplattieren unlösbar miteinander verbundenen Stahllagen zusammengesetzt ist, von denen die jeweils außen liegenden Stahllagen jeweils eine Decklage und die zwischen den Decklagen liegende Stahllage eine Kernlage bilden, wobei die Kernlage eine höhere Verformbarkeit als die Decklagen und die Decklagen eine höhere Härte als die Kernlage aufweisen, und wird weiter durch die zusätzlichen technischen Merkmale des Anspruchs 1 definiert.

Indem eine erfindungsgemäße Siebstange in der voranstehend angegebenen Weise aus einem Verbundstahlblech besteht, weist sie eine optimale Kombination aus hoher Verformbarkeit und Verschleißbeständigkeit auf, welche konventionelle, aus hochfesten Stählen oder Federstählen alleine gefertigte Siebstangen nicht erreichen.

Der Anteil der Dicke der Kernlage an der Gesamtdicke des Verbundstahlblechs, aus dem die Siebstange erfindungsgemäß hergestellt ist, beträgt optimalerweise mindestens 40 %, insbesondere 45 - 55 %. Bei einer derartigen Aufteilung ergibt sich eine optimale Verteilung von Verschleißbeständigkeit und Widerstand gegen mechanische Belastungen. Der Rest der Gesamtdicke des Verbundstahlblechs teilt sich dann zweckmäßigerweise zu gleichen Teilen auf die Dicke der Decklagen auf. Jedoch kann es abhängig von der Art des Einsatzes ebenfalls vorteilhaft sein, beispielsweise die Decklage, die im Gebrauch vom Siebgut direkt angeströmt wird, dicker auszubilden.

Grundsätzlich werden die Vorteile der Erfindung bereits erreicht, wenn die Kernlage aus einer einzigen Stahlschicht besteht. Sofern jedoch auch der Kernlage über ihre Dicke verteilt unterschiedliche Eigenschaften zugeordnet werden sollen oder dies aus fertigungstechnischer Sicht zweckmäßig ist, so kann auch die Kernlage aus zwei oder mehr aufeinander liegenden und wiederum durch Walzplattieren miteinander verbundenen Schichten bestehen. Ein solcher mehrschichtiger Aufbau kann beispielsweise dann zweckmäßig sein, wenn der Übergang zwischen den harten Deckschichten und der im Vergleich zu den Decklagen besser verformbaren Kernschicht in mehreren Stufen erfolgen soll, um schroffe Eigenschaftsbrüche im Verbundstahlblech zu vermeiden. Sofern die Kernlage mehrschichtig ausgebildet ist, kann es in dieser Hinsicht zweckmäßig sein, die Schichten der Kernlage gleichmäßig dick auszubilden.

Erfindungsgemäß bestehen die Decklagen aus einem martensitischen Stahl, der eine hohe Härte ermöglicht. Die Legierung des Stahls der Decklage sollte dabei so gewählt werden, dass die Decklagen eine Härte von mehr als 500 HBW aufweisen.

Ein Stahl, der die für die Decklage optimale Härte bereitstellt, enthält erfindungsgemäß neben Eisen und unvermeidbaren Verunreinigungen (in Gew.-%) 0,35 - 0,45 % C, 0,15 - 0,30 % Si, 0,75 - 0,95 % Mn, 0,07 - 0,1 Al, 0,8 - 0,95 % Cr, 0,017 - 0,028 % Nb, 0,15 - 0,28 % Mo, 1,1 - 1,3 % Ni, 0,0015 - 0,0035 % B und 0,0007 - 0,0030 % Ca.

Insbesondere kann der Stahl (in Gew.-%) 0,35 - 0,38 % C, 0,15 - 0,30 % Si, 0,75 - 0,90 % Mn, 0,08 - 0,1 % Al, 0,80 - 0,95 % Cr, 0,017 - 0,027 % Nb, 0,22 - 0,28 % Mo, 1,10 - 1,30 % Ni, 0,0015 - 0,0035 % B, 0,0007 - 0,0030 % Ca, Rest Eisen und unvermeidbare Verunreinigungen enthalten. Ebenso fällt unter die erfindungsgemäß für die Decklagen vorgesehen Legierung ein Stahl, der neben Eisen und unvermeidbaren Verunreinigungen (in Gew.-%) 0,42 - 0,45 % C, 0,15 - 0,20 % Si, 0,80 - 0,95 % Mn, 0,07 - 0,1 % Al, 0,80 - 0,95 % Cr, 0,021 - 0,028 % Nb, 0,15 - 0,20 % Mo, 1,10 - 1,30 % Ni, 0,0015 - 0,0035 % B, 0,0010 - 0,0030 % Ca, Rest Eisen und unvermeidbare Verunreinigungen enthält. Die Kombination der Legierungsbestandteile des für die Decklage erfindungsgemäß vorgeschlagenen Stahls führt zu einer hohen Härte.

Kohlenstoff in Gehalten von 0,35 - 0,45 % ist dabei von besonderer Bedeutung, um den erforderlichen hohen Verschleißwiderstand in der Außenschicht sicherzustellen. Beim Härten bildet sich als Gefügebestandteil des Stahls Martensit, dessen Härte mit zunehmendem C-Gehalt steigt.

Für die angestrebte Härte von mehr als 500 HBW ist ein Mindestkohlenstoffgehalt von 0,35 Gew.-% erforderlich. Gleichzeitig sollte der Kohlenstoffgehalt auf maximal 0,45 Gew.-% beschränkt sein, um eine Versprödung der äußeren Schichten zu vermeiden.

Chrom in Gehalten von 0,8 - 0,95 Gew.-% und Molybdän in Gehalten von 0,15 - 0,28 Gew.-% fördern jeweils die Härteannahme und die Durchhärtbarkeit. Eine Erhöhung des Verschleißwiderstandes wird zusätzlich durch die karbidbildende Wirkung von Chrom gefördert.

Al ist im erfindungsgemäß für die Decklage vorgesehenen Stahl in Gehalten von 0,07 - 0,1 Gew.-% vorhanden, um den im Stahl vorhandenen Stickstoff abzubinden, so dass das in Gehalten von 0,0015 - 0,0035 Gew.-% vorhandene Bor seine festigkeitssteigernde Wirkung entfalten kann.

Ebenso erfolgt eine N-Abbindung über das zusätzlich in Gehalten von 0,017 - 0,028 Gew.-% zugegebene Nb. Auf diese Weise kann Bor in atomarer Form die Gefügeumwandlung verzögern und so die Härtbarkeit verbessern. Aluminiumgehalte oberhalb 0,1 Gew.-% führen zu freiem Aluminium, wodurch die Gefahr der Bildung von unerwünschtem Aluminiumoxid ansteigt. Niob ist bei Gehalten oberhalb 0,015 Gew.-% wirksam. Der Niobgehalt ist auf maximal 0,30 Gew.-% begrenzt, um die Bildung des zähigkeitsschädlichen Niobcarbids zu vermeiden.

Die zusätzlich notwendige Verformbarkeit wird durch die gezielte Zugabe von Nickel in Gehalten von 1,10 - 1,30 Gew.-% erreicht. Durch die Verringerung der kritischen Abkühlgeschwindigkeit erhöht Nickel darüber hinaus die Durchhärtung und Durchvergütung.

Eine optimale Kombination von Härte und Verformbarkeit der Kernlage ergibt sich bei einer erfindungsgemäßen Siebstange dann, wenn die Kernlage eine Härte von 350 - 500 HBW besitzt.

Sofern hier Härtewerte HBW angegeben sind, handelt es sich dabei um die Angabe der Brinell-Härte. Sie wird gemäß DIN EN ISO 6506-1 als Härteprüfung nach Brinell mit einer Hartmetallkugel (HBW) ermittelt, welche einen Durchmesser von 10 mm aufweist, unter Aufbringen einer Last von rund 30 kN an drei äquidistant über die Blechdicke verteilten Stellen eines Querschliffs. Der Querschliff umfasst im Fall der Decklage die gesamte Dicke der Decklage. Im Fall der Kernlage umfasst er die halbe Dicke der Kernlage ausgehend von der Grenze zwischen Decklage und Kernlage bis zur Mitte der Kernlage. Aus den drei Einzelwerten wird ein Mittelwert gebildet, welcher als Härtewerte angegeben wird.

Ein für die Kernlage des erfindungsgemäß für die Herstellung einer Siebstange geeigneter Stahl enthält neben Eisen und unvermeidbaren Verunreinigungen (in Gew.-%) 0,16 - 0,22 % C, 0,15 - 0,40 % Si, 0,90 - 1,45 % Mn, 0,02 - 0,1 gelöstes Al, 0,45 - 1,05 % Cr, bis zu 0,033 % Nb, bis zu 0,65 % Mo, bis zu 2,0 % Ni, bis zu 0,0035 % B und 0,0007 - 0,0030 % Ca.

Insbesondere durch den verminderten C-Gehalt sind unter Ausnutzung der voranstehend im Zusammenhang mit dem für die Decklage vorgeschlagenen Stahl bereits erläuterten Wirkprinzipien die Legierungsgehalte des erfindungsgemäß für die Kernlage geeigneten Stahls so eingestellt, dass sich ein optimales Verhältnis von Festigkeit und Verformbarkeit des Kernlagen-Stahls ergibt.

Unter die erfindungsgemäß für die Kernlage vorgesehene Legierung fallen beispielsweise auch die bekannten Stähle mit der Werkstoffnummer 1.8942 und 1.8722.

Das erfindungsgemäße Verfahren zum Herstellen einer erfindungsgemäßen Siebstange umfasst folgende Arbeitsschritte:
- Bereitstellen eines ersten warmgewalzten, die Kernlage des Verbundstahlblechs bildenden Stahlblechs;
- Bereitstellen von zwei warmgewalzten, die Decklagen bildenden Stahlblechplatten;
- optional: Reinigen und Richten der Flächen der Stahlblechplatten, mit denen die Stahlblechplatten im folgenden Schritt aufeinander gelegt werden;
- Bilden eines Stapels von aufeinanderliegenden Stahlblechplatten durch Auflegen der die Kernlage bildenden Stahlblechplatten auf die die erste Decklage bildenden Stahlblechplatte und Auflegen der die zweite Decklage bildenden Platte auf die Kernlage;
- festes, unlösbares Verbinden der Stahlblechlagen des Stapels;
- Erwärmen des Stapels auf eine Warmwalzanfangstemperatur;
- Warmwalzen des Stapels in einem oder mehreren Warmwalzschritten zu einem warmgewalzten Verbundstahlblech, wobei der Stapel optional vor jedem Warmwalzschritt auf die Warmwalzanfangstemperatur wiedererwärmt wird;
- optional: Wärmebehandeln des Verbundstahlblechs, wobei das Wärmebehandeln
   - eine Erwärmung des Verbundstahlblechs auf eine Temperatur, die oberhalb der höchsten der Ac3-Temperaturen der Stähle liegt, aus denen die Decklagen und die Kernlage des Verbundstahlblechs bestehen,
   - ein anschließendes Abschrecken des erwärmten Verbundstahlblechs mit einer Abkühlgeschwindigkeit umfasst, die ausreicht, um in den Decklagen des Verbundstahlblechs Härtegefüge zu erzeugen, und
   - optional: ein Anlassen des abgeschreckten Verbundstahlblechs umfasst;
- Ausschneiden der Siebstange aus dem Verbundstahlblech;
- optional: spanabhebende Nachbearbeitung der aus dem Verbundstahlblech geschnittenen Siebstange;
und wird weiter durch die zusätzlichen technischen Merkmale des Anspruchs 8 definiert.

In der Praxis lässt sich ein erfindungsgemäß zur Herstellung einer Siebstange der erfindungsgemäßen Art verwendetes, mindestens dreilagig aufgebautes und als Grobblech (Dicke > 3 mm, insbesondere > 50 mm) verarbeitetes Verbundstahlblech dadurch herstellen, dass zunächst in konventioneller Weise durch Warmwalzen mindestens drei im Wesentlichen quaderförmige Grobblech-Platten aus unterschiedlichen Stählen erzeugt werden. Zwei beispielsweise aus demselben eine hohe Härte ermöglichenden Stahl erzeugte Platten sind dabei für die Decklagen des fertigen Verbundstahlblechs bestimmt, während die aus einem Stahl von geringerer Härtbarkeit erzeugte dritte Platte beim fertigen Verbundstahlblech die Kernlage bildet.

Sofern dies aus anwendungstechnischen Erwägungen zweckmäßig ist, können die Stahlwerkstoffe der für die Decklagen vorgesehenen Platten auf die jeweiligen Anforderungen individuell abgestimmt sein. Die die Kernlage bildende Platte besteht dagegen aus einem Stahlwerkstoff, der eine im Vergleich zum Stahl der Decklagen hohe Verformbarkeit besitzt.

Bei einem dreilagigen Stahlverbund beträgt die Dicke der beiden Decklagen beispielsweise jeweils 25 % der Gesamtdicke, während die Kernlage den Rest der Gesamtdicke einnimmt. Entsprechend wird das Verhältnis der Dicken der bereitgestellten Platten bemessen. Soll die Kernlage aus mehreren Schichten zusammengesetzt werden, kann die Dicke der für die einzelnen Schichten der Kernlage vorgesehenen Platten gleich sein. Auch kann es in diesem Fall zweckmäßig sein, wenn die Dicke der für die Decklagen vorgesehenen Platten und die Dicke der für die Schichten der Kernlage vorgesehenen Platten gleich sind. Es ergibt sich dann ein Verbundstahlblech, dessen Lagen bzw. Schichten ebenfalls gleich dick sind.

Erforderlichenfalls werden die Platten-Oberflächen, die im folgenden Arbeitsgang aufeinander gelegt werden, einer Oberflächenbehandlung unterzogen. Bei dieser Behandlung wird die Oberflächenform der einen Platte an die Oberflächenform der anderen Platte derart angepasst, dass, wenn die Platten aufeinander gestapelt sind, die betreffenden Oberflächen dicht aufeinander liegen und ein großflächiger, gleichmäßiger Kontakt gesichert ist. Dazu werden die Oberflächen von unerwünschten Fremdpartikeln wie Zunder befreit und chemischphysikalisch aktiviert.

Anschließend werden die so optional vorbehandelten Platten zu einem Stapel aufeinander gelegt. Das Aufstapeln beginnt mit einer für die erste Decklage vorgesehenen Platte. Darauf wird die für die Kernlage vorgesehene Platte gelegt. Sind mehrere Platten für die Kernlage vorgesehen, werden diese Platten auf die der ersten Decklage zugeordnete Platte gestapelt. Den Abschluss bildet dann wiederum die Platte, die beim fertigen Verbundstahlblech die zweite Decklage bildet.

Die aufeinanderliegenden Platten des Stapels werden anschließend fest miteinander verbunden. Dies kann durch Verschweißen erfolgen.

Der so gebildete feste Stapel wird auf eine Warmwalzanfangstemperatur erwärmt und zu einem Grobblech warmgewalzt. Das Warmwalzen kann in einem Schritt oder in zwei oder mehr Schritten erfolgen. Jeder dieser Warmwalzschritte kann einen, zwei oder mehrere vom Walzgut zu durchlaufende Warmwalzstiche umfassen. Werden mehrere Walzschritte durchgeführt, sollte vor jedem Warmwalzschritt erneut auf die notwendige Warmwalzanfangstemperatur erwärmt werden.

Das auf diesem Wege erhaltene warmgewalzte Verbundstahlblech wird anschließend einer Wärmebehandlung unterzogen. Dazu wird das Grobblech auf eine Temperatur erwärmt, die oberhalb der höchsten Ac3-Temperatur der für die Decklage und die Kernlage vorgesehenen Stahlwerkstoffe liegt. Anschließend wird das derart temperierte Verbundstahlblech in einem geeigneten Abschreckmedium so schnell abgeschreckt, dass sich in den beiden Decklagen des walzplattierten Stahles überwiegend Martensit bildet. In der Praxis eignen sich hierfür Abkühlgeschwindigkeiten von mindestens 25 K/s. Die Härte der einzelnen Lagen kann erforderlichenfalls durch eine Anlassbehandlung bei einer Anlasstemperatur eingestellt werden, die unterhalb der Acl-Temperatur des jeweiligen Stahls liegt.

Nachfolgend wird die Erfindung anhand einer ein Ausführungsbeispiel darstellenden Zeichnung näher erläutert. Es zeigen jeweils schematisch:

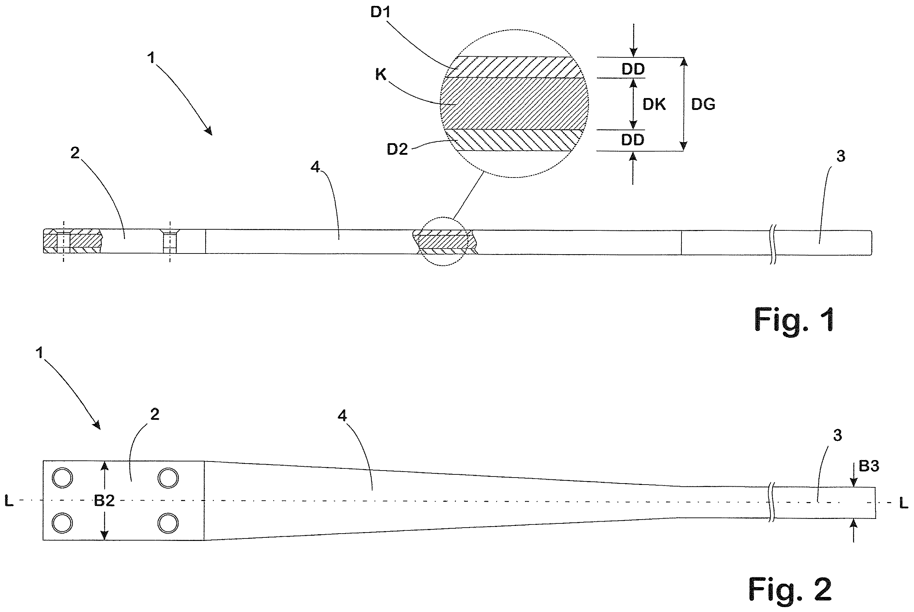

- Fig. 1: eine Siebstange in einer seitlichen, teilweise aufgebrochenen Ansicht;
- Fig. 2: die Siebstange in Draufsicht.

Die einstückig aus einem Verbundstahlblech bestehende und in Bezug auf ihre Längsachse L symmetrisch geformte Siebstange 1 weist einen in Draufsicht rechteckigen Anschlussabschnitt 2 auf. Der Anschlussabschnitt 2 bildet einen Endabschnitt der Siebstange 1, über den die Siebstange im Gebrauch an einem hier nicht gezeigten Halter eines ebenfalls hier nicht dargestellten konventionellen Stangensiebs befestigt wird. Des Weiteren weist die Siebstange einen an ihrem anderen Ende ausgebildeten Stangenabschnitt 3 auf, dessen Breite B3 kleiner als die Breite B2 des Anschlussabschnitts 2 ist. Die Verbindung zwischen dem Anschlussabschnitt 2 und dem Endabschnitt 3 bildet ein Übergangsabschnitt 4, der in Draufsicht gesehen ausgehend vom Anschlussabschnitt 2 in Richtung des Stangenabschnitts 3 zuläuft. Die Länge des Stangenabschnitts 3 beträgt ein Vielfaches der Länge des Anschlussabschnitts 2 und des Übergangsabschnitts 4.

Zur Herstellung der Siebstange 1 sind zwei für die Decklagen D1,D2 des fertigen Verbundstahlblechs vorgesehene Grobblech-Platten aus einem Stahl A und eine Grobblech-Platte für die Kernlage aus einem Stahl B durch Warmwalzen hergestellt worden. Die Abmessungen der Platten und die Zusammensetzung der Stähle A und B sind in Tabelle 1 angegeben.

Nach einem Reinigen und Richten der einander zugeordneten Oberflächen sind die Platten zu einem Stapel gestapelt worden, bei dem zwischen den beiden für die Decklagen bestimmten Platten die für die Kernlage bestimmte Platte angeordnet ist. Die im Stapel dicht aufeinander liegenden Platten sind anschließend miteinander verschweißt worden. Der so gebildete feste Stapel hatte eine Gesamtdicke von 250 mm.

Dieser Stapel ist auf eine Walzanfangstemperatur von 1250 °C erwärmt und in fünf reversierenden Walzstichen auf eine Dicke von 160 mm vorgewalzt worden. Bei dieser Warmumformung fand gleichzeitig das Warmwalzplattieren statt. Das vorgewalzte Plattenpaket wurde in einem zweiten Schritt nach erneutem Erwärmen auf eine Walzanfangstemperatur von 1250 °C zu einem Verbundstahlblech fertig gewalzt. Nach dem Fertigwalzen betrug die Gesamtdicke DG des Verbundstahlblechs 60 mm, wobei die Dicke DD der beiden aus dem Stahl A bestehenden Decklagen D1,D2 jeweils 15 mm und die Dicke DK der Kernlage K aus dem Stahl B 30 mm betrug.

Das Verbundstahlblech hat anschließend eine Wärmebehandlung durchlaufen, um die erforderliche Härte der Decklagen D1,D2 einzustellen. Dazu ist das Verbundstahlblech in einem Rollenherdofen durchgreifend auf 920 °C erwärmt und anschließend in einer Wasserquette durch beidseitige Druckwasserbeaufschlagung mit einer Abkühlgeschwindigkeit von mindestens 25 K/s schnell auf eine unterhalb von 150 °C liegende Temperatur abgeschreckt worden. Durch diesen Härtevorgang wurde in den Decklagen D1,D2 eine in der oben erläuterten Weise gemäß DIN EN ISO 6506-1 ermittelte Härte von 621 HBW 10/3000 und in der Kernlage K eine Härte von 437 HBW 10/3000 erzielt. Die Kernlage K wies dementsprechend eine deutlich höhere Bruchdehnung von etwa 9 % auf als die Decklagen D1,D2. Die Bruchdehnung wurde dabei im Rahmen einer an Rundzugproben durchgeführten Zugprüfung gemäß DIN EN ISO 6892 - Teil 1, Verfahren B, ermittelt, welche als Proportionalstäbe mit ihrer Längsachse parallel zur Walzrichtung gefertigt wurden.

Aus dem so gehärteten Verbundstahlblech ist anschließend die Siebstange 1 durch ein thermisches Trennverfahren, beispielsweise Laserschneiden, oder ein anderes Strahlschneideverfahren, z. B. Wasserstrahlschneiden, herausgeschnitten und einer mechanischen, spanabhebenden Bearbeitung unterzogen worden, durch die sie auf ihre für den Einbau erforderliche Endform gebracht worden ist.

Von typischem Aufgabematerial (70 % Granit, 30 % Quarzdiorit) und einer Mischung aus Abrasivverschleiß und Prallverschleiß ausgehende Vergleichsuntersuchungen ergaben, dass die erfindungsgemäß aus dem in der voranstehenden Weise erzeugten Verbundstahlblech bestehenden Siebstangen eine fünfmal längere Standzeit aufweisen als Siebstangen, die in konventioneller Weise aus einem herkömmlichen hochfesten, flüssigkeitsvergüteten Sonderbaustahl mit der Werkstoffnummer 1.8933 und dem EN-Kurznamen S960QL hergestellt worden sind.

### BEZUGSZEICHEN

- 1: Siebstange
- 2: Anschlussabschnitt
- 3: Stangenabschnitt
- 4: Übergangsabschnitt

- B3: Breite des Stangenabschnitts 3
- B2: Breite des Anschlussabschnitts 2
- DG: Gesamtdicke des Verbundstahlblechs, aus dem die Siebstange 1 geschnitten ist
- DK: Dicke der Kernlage K
- DD: jeweilige Dicke der Decklagen D1,D2
- D1,D2: Decklagen
- K: Kernlage
- L: Längsachse der Siebstange 1

**Tabelle 1**

| Platten für | Stahl | Dicke | Breite | Länge | C | Si | Mn | Al | Cr | Nb | Mo | Ni | B |
|---|---|---|---|---|---|---|---|---|---|---|---|---|---|
| | | [mm] | | | [Gew.-%] *) | | | | | | | | |
| Decklagen | A | 62,5 | 1000 | 4800 | 0,43 | 0,20 | 0,84 | 0,110 | 0,84 | 0,024 | 0,15 | 1,10 | 0,0023 |
| Kernlage | B | 125 | 1000 | 4800 | 0,16 | 0,22 | 0,92 | 0,077 | 0,47 | 0,029 | 0,03 | 0,04 | 0,0021 |

| | | | | | | | | | | | | | |
|---|---|---|---|---|---|---|---|---|---|---|---|---|---|
| *) Rest Eisen und unvermeidbare Verunreinigungen | | | | | | | | | | | | | |

## Patentansprüche

1. Siebstange (1) für ein Stangensieb, wobei sie aus einem Verbundstahlblech gefertigt ist, das aus mindestens drei aufeinanderliegenden und durch Walzplattieren unlösbar miteinander verbundenen Stahllagen zusammengesetzt ist, von denen die jeweils außen liegenden Stahllagen jeweils eine Decklage (D1,D2) und die zwischen den Decklagen liegende Stahllage eine Kernlage (K) sind, und **dass** die Kernlage (K) eine höhere Verformbarkeit als die Decklagen (D1,D2) und die Decklagen (D1,D2) eine höhere Härte als die Kernlage (K) aufweisen, wobei die Decklagen (D1,D2) aus einem martensitischen Stahl bestehen, der neben Eisen und unvermeidbaren Verunreinigungen in Gewichtsprozent 0,35 - 0,45 % C, 0,15 - 0,30 % Si, 0,75 - 0,95 % Mn, 0,07 - 0,1 % Al, 0,8 - 0,95 % Cr, 0,017 - 0,028 % Nb, 0,15 - 0,28 % Mo, 1,1 - 1,3 % Ni, 0,0015 - 0,0035 % B und 0,0007 - 0,0030 % Ca enthält.

2. Siebstange (1) nach Anspruch 1, **dadurch gekennzeichnet, dass** die Dicke (DK) der Kernlage (K) mindestens 40 % der Gesamtdicke (D) des Verbundstahlblechs beträgt, aus dem die Siebstange (1) hergestellt ist.

3. Siebstange (1) nach einem der voranstehenden Ansprüche, **dadurch gekennzeichnet, dass** die Kernlage (K) aus zwei oder mehr aufeinander liegenden und durch Walzplattieren miteinander verbundenen Schichten besteht.

4. Siebstange (1) nach Anspruch 3, **dadurch gekennzeichnet, dass** die Härte der Decklagen (D1,D2) mehr als 500 HBW beträgt.

5. Siebstange (1) nach einem der voranstehenden Ansprüche, **dadurch gekennzeichnet, dass** die Härte der Kernlage (K) 350 - 500 HBW beträgt.

6. Siebstange (1) nach einem der voranstehenden Ansprüche, **dadurch gekennzeichnet, dass** der Stahl der Kernlage (K) neben Eisen und unvermeidbaren Verunreinigungen in Gewichtsprozent 0,16 - 0,22 % C, 0,15 - 0,40 % Si, 0,90 - 1,45 % Mn, 0,02 - 0,1 Al, 0,45 - 1,05 % Cr, bis zu 0,033 % Nb, bis zu 0,65 % Mo, bis zu 2,0 % Ni, bis zu 0,0035 % B und 0,0007 - 0,0030 % Ca enthält.

7. Stangensieb mit mindestens einer gemäß einem der voranstehenden Ansprüche ausgebildeten Siebstange (1).

8. Verfahren zum Herstellen einer gemäß einem der Ansprüche 1 bis 7 ausgebildeten Siebstange (1), umfassend folgende Arbeitsschritte:
- Bereitstellen einer ersten warmgewalzten, die Kernlage (K) des Verbundstahlblechs bildenden Stahlblechplatte;
- Bereitstellen von zwei warmgewalzten, die Decklagen (D1,D2) bildenden Stahlblechplatten, wobei die Decklagen (D1, D2) aus einem martensitischen Stahl bestehen, der neben Eisen und unvermeidbaren Verunreinigungen in Gewichtsprozent 0,35 - 0,45 % C, 0,15 - 0,30 % Si, 0,75 - 0,95 % Mn, 0,07 - 0,1 % Al, 0,8 - 0,95 % Cr, 0,017 - 0,028 % Nb, 0,15 - 0,28 % Mo, 1,1 - 1,3 % Ni, 0,0015 - 0,0035 % B und 0,0007 - 0,0030 % Ca enthält;
- optional: Reinigen und Richten der Flächen der Stahlblechplatten, mit denen die Stahlblechplatten im folgenden Schritt aufeinander gelegt werden;
- Bilden eines Stapels von aufeinanderliegenden Stahlblechplatten durch Auflegen der die Kernlage (K) bildenden Stahlblechplatten auf die die erste Decklage (D1) bildenden Stahlblechplatte und Auflegen der die zweite Decklage (D2) bildenden Platte auf die Kernlage (K);
- festes, unlösbares Verbinden der Stahlblechlagen des Stapels;
- Erwärmen des Stapels auf eine Warmwalzanfangstemperatur;
- Warmwalzen des Stapels in einem oder mehreren Warmwalzschritten zu einem warmgewalzten Verbundstahlblech, wobei der Stapel optional vor jedem Warmwalzschritt auf die Warmwalzanfangstemperatur wiedererwärmt wird;
- optional: Wärmebehandeln des Verbundstahlblechs, wobei das Wärmebehandeln
- eine Erwärmung des Verbundstahlblechs auf eine Temperatur, die oberhalb der höchsten der Ac3-Temperaturen der Stähle liegt, aus denen die Decklagen (D1,D2) und die Kernlage (K) des Verbundstahlblechs bestehen,
- ein anschließendes Abschrecken des erwärmten Verbundstahlblechs mit einer Abkühlgeschwindigkeit umfasst, die ausreicht, um in den Decklagen (D1,D2) des Verbundstahlblechs Härtegefüge zu erzeugen, und
- optional: ein Anlassen des abgeschreckten Verbundstahlblechs
umfasst;
- Ausschneiden der Siebstange (1) aus dem Verbundstahlblech;
- optional: spanabhebende Nachbearbeitung der aus dem Verbundstahlblech geschnittenen Siebstange (1).

## Claims

1. Screen bar (1) for a bar screen, wherein said screen bar is made from a steel composite panel which is composed of at least three steel layers which lie on top of one another and are non-releasably interconnected by roll cladding, of which steel layers the respective outboard steel layers are in each case a top layer (D1, D2), and the steel layer between the top layers is a core layer (K), and in that the core layer (K) has higher deformability than the top layers (D1, D2), and that the top layers (D1, D2) have a higher hardness than the core layer (K), wherein the top layers (D1, D2) consist of martensitic steel which apart from iron and unavoidable contaminations contains in percent of weight 0.35 - 0.45 % C, 0.15 - 0.30 % Si, 0.75 - 0.95 % Mn, 0.07 - 0.1 % Al, 0.8 - 0.95 % Cr, 0.017 - 0.028 % Nb, 0.15 - 0.28 % Mo, 1.1 - 1.3 % Ni, 0.0015 - 0.0035 % B, and 0.0007 - 0.0030 % Ca.

2. Screen bar (1) according to Claim 1, **characterized in that** the thickness (DK) of the core layer (K) is at least 40 % of the total thickness (D) of the steel composite panel from which the screen bar (1) is manufactured.

3. Screen bar (1) according to one of the preceding claims, **characterized in that** the core layer (K) consists of two or more tiers which lie on top of one another and are interconnected by roll cladding.

4. Screen bar (1) according to Claim 3, **characterized in that** the hardness of the top layers (D1, D2) is in excess of 500 HBW.

5. Screen bar (1) according to one of the preceding claims, **characterized in that** the hardness of the core layer (K) is 350 - 500 HBW.

6. Screen bar (1) according to one of the preceding claims, **characterized in that** the steel of the core layer (K) apart from iron and unavoidable contaminations contains in percent of weight 0.16 - 0.22 % C, 0.15 - 0.40 % Si, 0.90 - 1.45 % Mn, 0.02 - 0.1 Al, 0.45 - 1.05 % Cr, up to 0.033 % Nb, up to 0.65 % Mo, up to 2.0 % Ni, up to 0.0035 % B, and 0.0007 - 0.0030 % Ca.

7. Bar screen having at least one screen bar (1) which is configured according to one of the preceding claims.

8. Method for manufacturing a screen bar (1) which is configured according to one of Claims 1 to 7, the method comprising the following operational steps:
- providing a first hot-rolled steel panel which forms the core layer (K) of the steel composite panel;
- providing two hot-rolled steel panels which form the top layers (D1, D2), wherein the top layers (D1, D2) consist of martensitic steel which apart from iron and unavoidable contaminations contains in percent of weight 0.35 - 0.45 % C, 0.15 - 0.30 % Si, 0.75 - 0.95 % Mn, 0.07 - 0.1 % Al, 0.8 - 0.95 % Cr, 0.017 - 0.028 % Nb, 0.15 - 0.28 % Mo, 1.1 - 1.3 % Ni, 0.0015 - 0.0035 % B, and 0.0007 - 0.0030 % Ca;
- optionally cleaning and dressing the faces of the steel panels, by way of which the steel panels in the following step are placed on top of one another;
- forming a stack of steel panels lying on top of one another, by placing the steel panels which form the core layer (K) onto the steel panel which forms the first top layer (D1), and placing the panel which forms the second top layer (D2) on the core layer (K);
- connecting the steel panel layers of the stack in a fixed and non-releasable manner;
- heating the stack to an initial temperature for hot rolling;
- hot rolling the stack in one or a plurality of hot-rolling steps to a hot-rolled steel composite panel, wherein the stack is optionally reheated to the initial temperature for hot-rolling prior to each hot-rolling step.;
- optionally heat-treating the steel composite panel, the heat treatment comprising:
- heating the steel composite panel to a temperature which is above the maximum of the Ac3 temperatures of the steel types of which the top layer (D1, D2) and the core layer (K) of the steel composites consist,
- subsequent quenching of the heated steel composite panel at a cooling rate which is sufficient for generating hardened structures in the top layers (D1, D2) of the steel composite panel, and
- optionally tempering of the quenched steel composite panel;
- cutting the screen bar (1) from the steel composite panel;
- optionally subtractive post-machining of the screen bar (1) cut from the steel composite panel.

## Revendications

1. Barreau de crible (1) destiné à un crible à barreaux, qui est fabriqué en une tôle d'acier composite, qui est composée par au moins trois couches d'acier superposées et reliées les unes avec les autres de manière permanente par placage par laminage, les couches d'acier extérieures formant chacune une couche de recouvrement (D1, D2) et la couche d'acier située entre les couches de recouvrement formant une couche de noyau (K), et la couche de noyau (K) possédant une aptitude à la déformation supérieure à celle des couches de recouvrement (D1, D2), et les couches de recouvrement (D1, D2) possédant une dureté supérieure à celle de la couche de noyau (K), les couches de recouvrement (D1, D2) étant constituée par un acier martensitique qui contient, outre le fer et les impuretés inévitables, en pourcentages en poids : 0,35 à 0,45 % de C, 0,15 à 0,30 % de Si, 0,75 à 0,95 % de Mn, 0,07 à 0,1 % d'Al, 0,8 à 0,95 % de Cr, 0,017 à 0,028 % de Nb, 0,15 à 0,28 % de Mo, 1,1 à 1,3 % de Ni, 0,0015 à 0,0035 % de B et 0,0007 à 0,0030 % de Ca.

2. Barreau de crible (1) selon la revendication 1, **caractérisé en ce que** l'épaisseur (DK) de la couche de noyau (K) est d'au moins 40 % de l'épaisseur totale (D) de la tôle d'acier composite, à partir de laquelle le barreau de crible (1) est fabriqué.

3. Barreau de crible (1) selon l'une quelconque des revendications précédentes, **caractérisé en ce que** la couche de noyau (K) est constituée par deux couches superposées ou plus, reliées les unes avec les autres par placage par laminage.

4. Barreau de crible (1) selon la revendication 3, **caractérisé en ce que** la dureté des couches de recouvrement (D1, D2) est supérieure à 500 HBW.

5. Barreau de crible (1) selon l'une quelconque des revendications précédentes, **caractérisé en ce que** la dureté de la couche de noyau (K) est de 350 à 500 HBW.

6. Barreau de crible (1) selon l'une quelconque des revendications précédentes, **caractérisé en ce que** l'acier de la couche de noyau (K) contient, outre le fer et les impuretés inévitables, en pourcentages en poids : 0,16 à 0,22 % de C, 0,15 à 0,40 % de Si, 0,90 à 1,45 % de Mn, 0,02 à 0,1 % d'Al, 0,45 à 1,05 % de Cr, jusqu'à 0,033 % de Nb, jusqu'à 0,65 % de Mo, jusqu'à 2,0 % de Ni, jusqu'à 0,0035 % de B et 0,0007 à 0,0030 % de Ca.

7. Crible à barreaux comprenant au moins un barreau de crible (1) configuré selon l'une quelconque des revendications précédentes.

8. Procédé de fabrication d'un barreau de crible (1) configuré selon l'une quelconque des revendications 1 à 7, comprenant les étapes suivantes :
- la préparation d'une première plaque en tôle d'acier laminée à chaud, formant la couche de noyau (K) de la tôle d'acier composite ;
- la préparation de deux plaques en tôle d'acier laminées à chaud, formant les couches de recouvrement (D1, D2), les couches de recouvrement (D1, D2) étant constituées par un acier martensitique qui contient, outre le fer et les impuretés inévitables, en pourcentages en poids : 0,35 à 0,45 % de C, 0,15 à 0,30 % de Si, 0,75 à 0,95 % de Mn, 0,07 à 0,1 % d'Al, 0,8 à 0,95 % de Cr, 0,017 à 0,028 % de Nb, 0,15 à 0,28 % de Mo, 1,1 à 1,3 % de Ni, 0,0015 à 0,0035 % de B et 0,0007 à 0,0030 % de Ca ;
- éventuellement : le nettoyage et l'orientation des surfaces des plaques en tôle d'acier avec lesquelles les plaques en tôle d'acier sont superposées à l'étape suivante ;
- la formation d'un empilement de plaques en tôle d'acier superposées par disposition de la plaque en tôle d'acier formant la couche de noyau (K) sur la plaque en tôle d'acier formant la première couche de recouvrement (D1) et disposition de la plaque formant la deuxième couche de recouvrement (D2) sur la couche de noyau (K) ;
- la liaison permanente solide des couches en tôle d'acier de l'empilement ;
- le chauffage de l'empilement à une température de début de laminage à chaud ;
- le laminage à chaud de l'empilement en une ou plusieurs étapes de laminage à chaud pour former une tôle d'acier composite laminée à chaud, l'empilement étant éventuellement réchauffé à la température de début de laminage à chaud avant chaque étape de laminage à chaud ;
- éventuellement : le traitement thermique de la tôle d'acier composite, le traitement thermique comprenant :
- un chauffage de la tôle d'acier composite à une température qui est supérieure à la plus élevée des températures Ac3 des aciers dont les couches de recouvrement (D1, D2) et la couche de noyau (K) de la tôle d'acier composite sont constituées,
- une trempe ultérieure de la tôle d'acier composite chauffée à une vitesse de refroidissement qui est suffisante pour former une structure de trempe dans les couches de recouvrement (D1, D2) de la tôle d'acier composite, et
- éventuellement : un recuit de la tôle d'acier composite trempée ;
- la découpe du barreau de crible (1) dans la tôle d'acier composite ;
- éventuellement : l'usinage par enlèvement de copeaux du barreau de crible (1) découpé dans la tôle d'acier composite.
